# EUROPÄISCHE PATENTSCHRIFT

(11) **EP 4 413 898 B1**
(45) Veröffentlichungstag und Bekanntmachung des Hinweises auf die Patenterteilung: **25.11.2026**
(21) Anmeldenummer: 23155782.8
(22) Anmeldetag: 09.02.2023
(51) Int. Cl.: A46B 9/04, A46B 13/02, A46D 3/00, A61C 17/22

(54) **BORSTENDISK**
BRISTLE DISK
DISQUE A POILS

(43) Veröffentlichungstag der Anmeldung: 14.08.2024
(73) Patentinhaber: Ivoclar Vivadent AG, 9494 Schaan (LI)
(72) Erfinder: Kuhn, Marvin, 65468 Trebur (DE); Schülke, Andreas, 9472 Grabs (CH); John, Hendrik, 9487 Gamprin (LI); Lendenmann, Urs, 9472 Grabs (CH)
(74) Vertreter: Baldus, Oliver

(56) Entgegenhaltungen:
- JP-A- 2019 122 726
- JP-A- 2022 173 878
- KR-B1- 101 495 238

## Beschreibung

Die vorliegende Erfindung betrifft ein Verfahren zum Herstellen einer Zahnbogenzahnbürste und eine Scheibe zum Herstellen einer Zahnbogenzahnbürste.

Gegenwärtige Zahnbogenzahnbürsten verwenden ein universelles und unangepasstes Mundstück für eine Anordnung der Borsten. Die Borsten sind in der Herstellung in großen Stückzahlen beispielsweise durch Spritzgießen nicht individuell anpassbar.

Hieraus ergibt sich das Problem, das bei unterschiedlichen Zahngeometrien, Größen oder unterschiedlich geformten oder langen Zahnbögen kein optimaler Kontakt zwischen den Borsten und den zu reinigenden Flächen der Zähne besteht. Auch können die Zahnzwischenräume nicht optimal erreicht werden.

Die Druckschrift EP 2 900 171 B1 betrifft ein orales Hygienesystem zum Reinigen von Zähnen und Zahnfleisch. Das System weist ein Mundstück mit einem gebogenen Kanal auf, der ausgestaltet ist, einen Dentalbogen mit einer gesamten Reihe von maxillaren und mandibulären Zähnen mit Zahnfleisch aufzunehmen und zu umgeben. Jedoch kann auch dieses System nicht optimal an die jeweiligen patientenspezifischen Zahnbogengeometrien angepasst werden.

Die Druckschrift KR 101 495 238 B1 betrifft eine individuell gefertigte Zahnbürste. Die Zahnbürste umfasst einen vibrierende Einfassung (Tray), in der die Bürsten so geformt sind, dass diese das Gebiss umgeben. Zur Herstellung der Zahnbürste wird ein Abdruck des oberen oder unteren Gebisses genommen.

Die Druckschrift JP 2019 122726 A betrifft eine Zahnbogenzahnbürste. Zur Herstellung wird eine Matte (Soft Sheet) mit Borsten wird an einen Gebissabdruck gelegt.

Die Druckschrift JP 2022 173878 A betrifft ein Verfahren zum Herstellen einer Zahnbürste. Hierzu werden dreidimensionale Daten durch Scannen der Mundhöhle eines Benutzers gewonnen.

Es ist die technische Aufgabe der Erfindung, die Herstellung einer individuell angepassten Zahnbogenzahnbürste zu ermöglichen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen einer Zahnbogenzahnbürste gelöst, mit den Schritten eines Erfassens einer Zahnbogenform eines Patienten; und eines Herausarbeitens der Zahnbogenform aus einer Scheibe, in der die Borsten der Zahnbogenzahnbürste eingebettet sind. Die Zahnbogenform kann ebenfalls aus den Borsten der Zahnbogenzahnbürste herausgearbeitet werden, die in einer Scheibe eingebettet sind, wobei die Spitzen der Borsten in der Scheibe aus einem Stützmaterial oder die Enden der Borsten aus einem Stützmaterial freigelegt werden. Dadurch wird beispielsweise der technische Vorteil erreicht, dass die Enden der Borsten bearbeitet werden können und die Zahnbogenzahnbürste auf einfache Weise hergestellt werden kann.

Die Scheibe kann beispielsweise eine Kunststoffscheibe sein. Die äußeren Abschnitte der Borsten der Zahnbogenzahnbürste können in einem entfernbaren Stützmaterial angeordnet sein. Durch das Verfahren wird der technische Vorteil erreicht, dass eine individuelle Zahnbogenzahnbürste hergestellt werden kann, bei der die Spitzen der Borsten immer in Kontakt mit der entsprechenden Stelle im Mund des Patienten stehen. Durch diese Zahnbogenzahnbürste wird die Reinigung der Zähne im Mund des Patienten verbessert.

In einer technisch vorteilhaften Ausführungsform des Verfahrens wird die Zahnbogenform mittels eines Intraoralscanners erfasst. Dadurch wird beispielsweise der technische Vorteil erreicht, dass die Form des Zahnbogens und der einzelnen Zähne auf einfache und schnelle Weise erfasst werden können.

In einer weiteren technisch vorteilhaften Ausführungsform des Verfahrens weist die herausgearbeitete Zahnbogenform kleinere Abmessungen auf als die erfasste Zahnbogenform. Es können auch nur bestimmte Abschnitte oder Bereiche der herausgearbeiteten Zahnbogenform kleinere Abmessungen aufweisen, wie beispielsweise die Zahnzwischenräume. In diesem Fall weisen in diesen Bereichen die Borsten eine höhere Spannung auf. Es kann auch in bestimmten Abschnitten oder Bereichen ein größerer Abstand der Borsten zum Zahnbogen bestehen. Dadurch wird beispielsweise der technische Vorteil erreicht, dass die Borsten mit einer höheren Spannung an dem Zahnbogen anliegen.

In einer weiteren technisch vorteilhaften Ausführungsform des Verfahrens werden die Spitzen der Borsten abgerundet. Dadurch wird beispielsweise der technische Vorteil erreicht, dass Verletzungen durch die Borsten verhindert werden können.

In einer weiteren technisch vorteilhaften Ausführungsform des Verfahrens werden die freigelegten Enden der Borsten in ein Trägermaterial eingebettet. Dadurch wird beispielsweise der technische Vorteil erreicht, dass die Enden der Borsten in dem Trägermaterial fixiert werden können.

In einer weiteren technisch vorteilhaften Ausführungsform des Verfahrens wird die äußere Form der Zahnbogenzahnbürste aus der Scheibe herausgearbeitet, beispielsweise mittels eines subtraktiven Verfahrens. Dabei kann die Länge der Zahnbogenzahnbürste angepasst werden, beispielsweise je nachdem ob ein Weisheitszahn vorhanden ist oder nicht. Dabei kann der Träger gekürzt werden oder die individuelle Form des Trägers angepasst werden. Dadurch wird beispielsweise der technische Vorteil erreicht, dass die Zahnbogenzahnbürste auf einfache Weise hergestellt werden kann.

In einer weiteren technisch vorteilhaften Ausführungsform des Verfahrens wird die Zahnbogenform aus der Scheibe und/oder die Form der Zahnbogenzahnbürste aus der Scheibe herausgefräst. Dadurch wird beispielsweise der technische Vorteil erreicht, dass durch das Fräsen eine genaue Formgebung ermöglicht wird.

Gemäß einem zweiten Aspekt wird die technische Aufgabe durch eine Scheibe zum Herstellen einer Zahnbogenzahnbürste aus einem Kunststoffmaterial gelöst, in der die Borsten der Zahnbogenzahnbürste eingebettet sind. Die Scheibe bildet einen Rohling für die Herstellung der Zahnbogenzahnbürste. Dadurch werden die gleichen technischen Vorteile wie durch das Verfahren nach dem ersten Aspekt erreicht, wobei die Spitzen der Borsten in einem auflösbaren Stützmaterial angeordnet sind.

In einer weiteren technisch vorteilhaften Ausführungsform der Scheibe umfasst das auflösbare Stützmaterial Polyethylenglykol, Polyvinylalkohol oder ein Wachs. Dies kann beispielsweise durch Wärme erreicht werden, so dass das Stützmaterial schmilzt. Das Stützmaterial kann auch wasserlöslich sein. In diesem Fall kann das Stützmaterial mittels Wasser herausgelöst werden. Dadurch wird beispielsweise der technische Vorteil erreicht, dass besonders geeignete Materialien verwendet werden, die beispielsweise auf eine einfache Weise aufgelöst werden können.

In einer weiteren technisch vorteilhaften Ausführungsform der Scheibe sind die Enden der Borsten in einem Trägermaterial angeordnet. Dadurch wird beispielsweise der technische Vorteil erreicht, dass die Enden der Borsten fixiert werden können.

In einer weiteren technisch vorteilhaften Ausführungsform der Scheibe sind die Borsten gerichtet oder ungerichtet, gekreuzt oder senkrecht zur Zahnoberfläche in der Scheibe angeordnet. Dadurch wird beispielsweise der technische Vorteil erreicht, dass die Borsten in geeigneter Anordnung in der Scheibe angeordnet sind.

In einer weiteren technisch vorteilhaften Ausführungsform werden Scheiben mit verschiedenen vorgegebenen Größen der **U-**förmigen Borstenanordnung verwendet, um möglichst alle Zahnbogenformen abbilden zu können. Dadurch wird beispielsweise der technische Vorteil erreicht, dass mit wenigen Formen möglichst alle Zahngrößen und -formen abgedeckt werden.

Ausführungsbeispiele der Erfindung sind in den Zeichnungen dargestellt und werden im Folgenden näher beschrieben.

Es zeigen:
- Fig. 1: eine schematische Darstellung einer Scheibe zum Herstellen einer Zahnbogenzahnbürste;

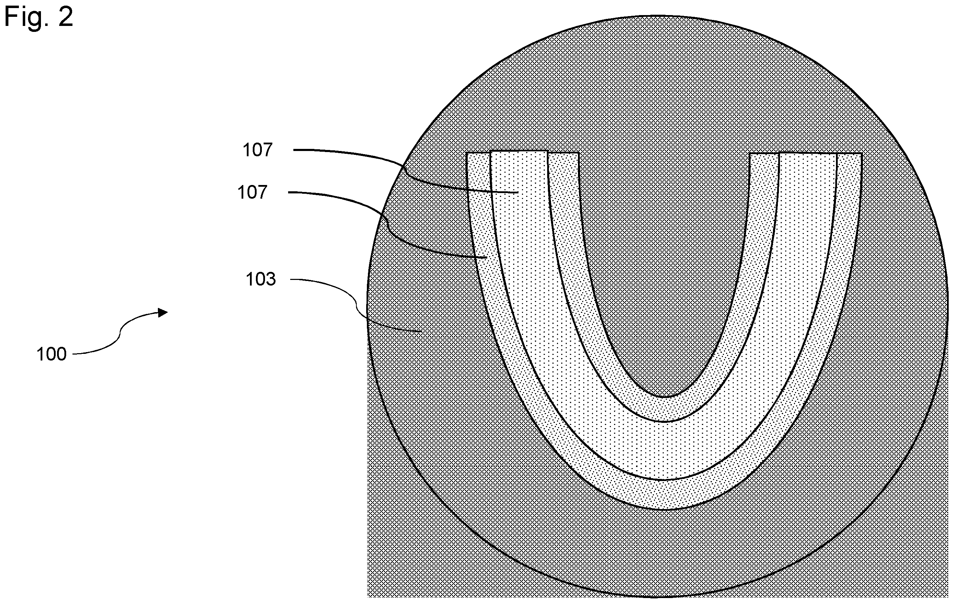

- Fig. 2: eine schematische Darstellung einer Scheibe zum Herstellen einer Zahnbogenzahnbürste;

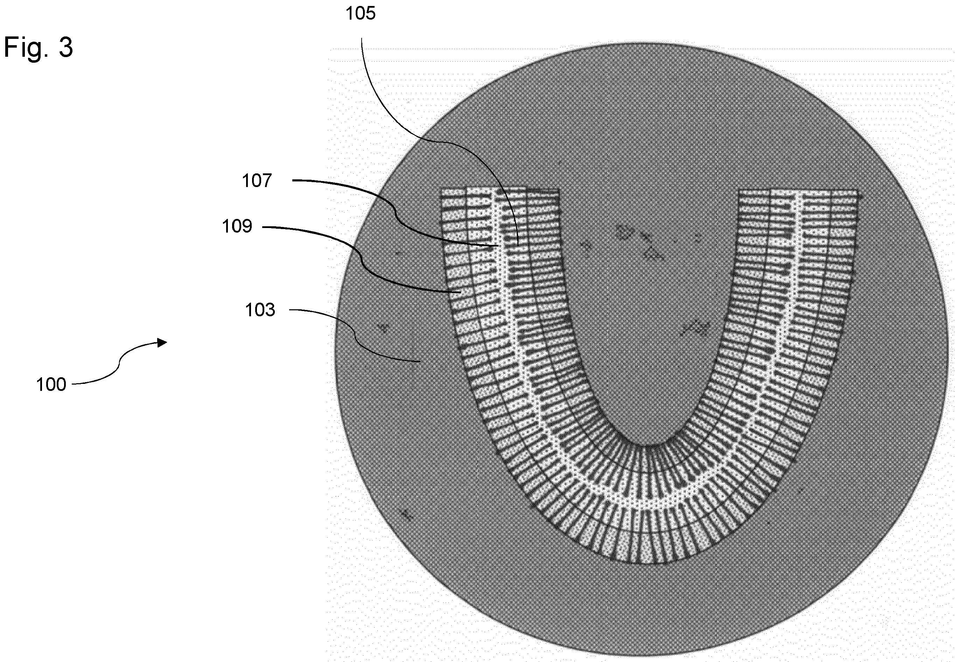

- Fig. 3: eine schematische Darstellung einer Scheibe zum Herstellen einer Zahnbogenzahnbürste mit Andeutung der eingebetteten Borsten;
- Fig. 4: eine schematische Darstellung einer Scheibe zum Herstellen einer Zahnbogenzahnbürste mit Andeutung der eingebetteten Borsten und herausgearbeitetem Zahnbogen;
- Fig. 5: eine Darstellung eines Prototypen einer Scheibe mit eingebetteten Borsten und herausgearbeitetem Zahnbogen;
- Fig. 6: eine schematische Darstellung von Scheiben mit verschieden großen Bögen
- Fig. 7: eine schematische Darstellung einer Zahnbogenzahnbürste; und
- Fig. 8: ein Blockdiagramm zum Herstellen der Zahnbogenzahnbürste.

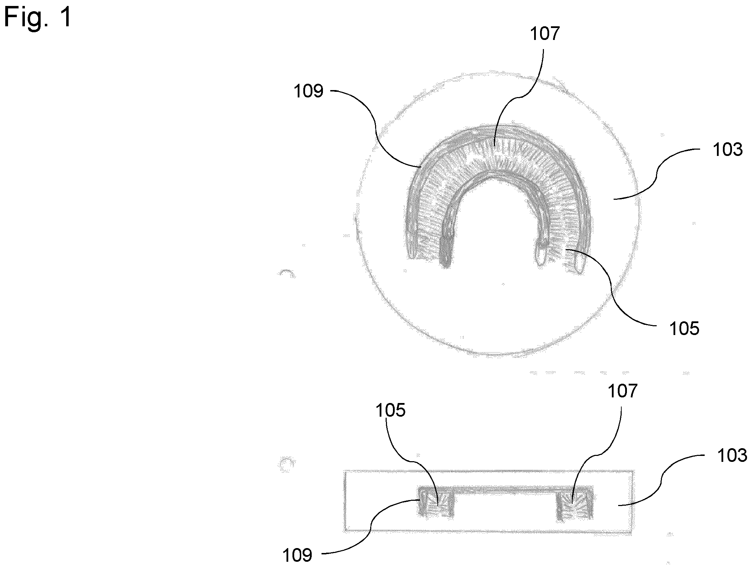

Fig. 1 zeigt eine schematische Darstellung einer runden Scheibe 103 zum Herstellen einer Zahnbogenzahnbürste 100 (Borstendisk). Die Scheibe 103 ist beispielsweise als Kunststoffscheibe aus Polyethylen (PE) oder Polyethylenterephthalat (PET) gebildet.

In der Scheibe 103 sind Borsten 105 im Verlauf eines Zahnbogens eingeschlossen. Die Borsten 105 befinden sich im Inneren der Scheibe 103. Die Borsten 105 können aus verschiedenen Materialien gebildet sein, wie beispielsweise Kunststoff, Silikon, oder Naturfaser.

Die Borsten 105 können in dem Material gerichtet oder ungerichtet eingebracht sein. Die Borsten 105 können in dem Material auch gekreuzt oder X-förmig angeordnet sein. Die Borsten 105 können auch annähernd senkrecht zur Zahnoberfläche angeordnet sein, so dass eine möglichst gute Reinigungswirkung der Borsten im Kontakt mit der Zahnoberfläche erzielt wird. Zusätzlich umfasst die Scheibe 103 ein Trägermaterial 109, in dem die Enden der Borsten 105 fixiert sind. Das Trägermaterial 109 ist beispielsweise aus Polyethylen (PE), Polyethylenterephthalat (PET) oder einem Elastomer, wie Silikon, gebildet.

Die anderen Abschnitte der Borsten 105 sind von einem Stützmaterial 107 umgeben. Die Borsten 105 sind in dem Stützmaterial 107 in einer Anordnung eingebettet, die durch das Heraustrennen der Borsten 105 eine individuelle Anpassung an den Zahnbogen und die Zahnform ermöglicht. Die Borsten 105 sind dadurch innerhalb der Scheibe 103 in einem Stützmaterial 107 eingebettet, das um die Borsten 105 herum entfernbar oder heraustrennbar ist. Das Entfernen des Stützmaterials 107 um die Borsten 105 herum kann beispielsweise durch Schmelzen des Stützmaterials 107 oder Lösen des Stützmaterials 107 in einem Medium erfolgen, wie beispielsweise Wasser. Nach dem Entfernen des Stützmaterials 107 werden die Borsten 105 weiterhin durch das Trägermaterial 109 gehalten.

Über eine Abformung oder einen Intraoralscan wird zunächst die passende Zahnbogengröße und Zahnform eines Patienten erfasst. Anschließend wird der erfasste Zahnbogen aus dem Material der Scheibe 103 herausgearbeitet, beispielsweise gefräst. Es kann auch aus einer Auswahl an unterschiedlich großen, U-förmigen Borstenbögen der am besten passende gewählt und dieser in der Länge angepasst werden. Die Scheibe 103 umfasst dann im Bereich der eingebetteten Borsten 105 eine Aussparung, die der erfassten Zahnbogenform entspricht.

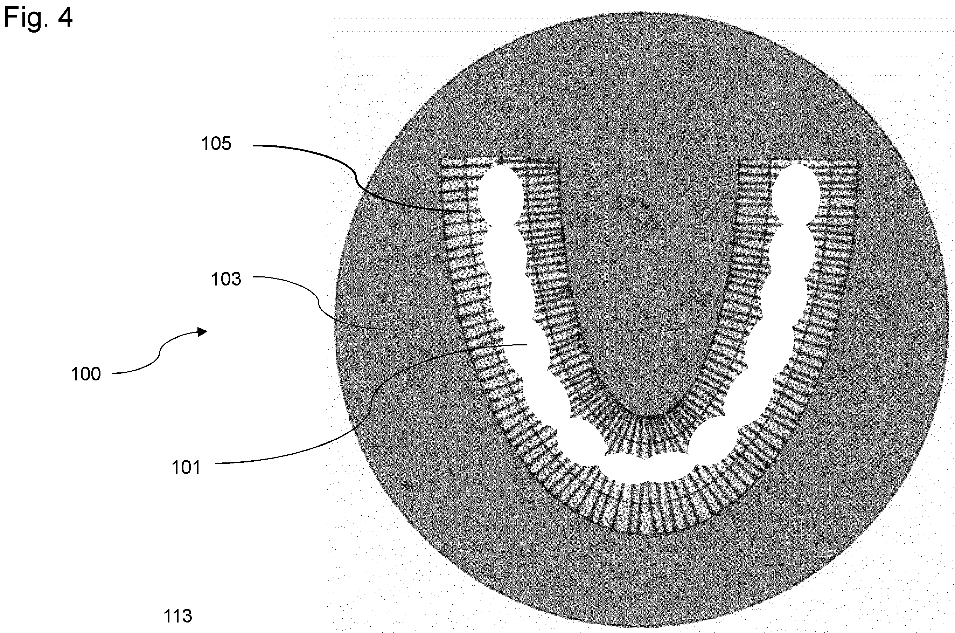

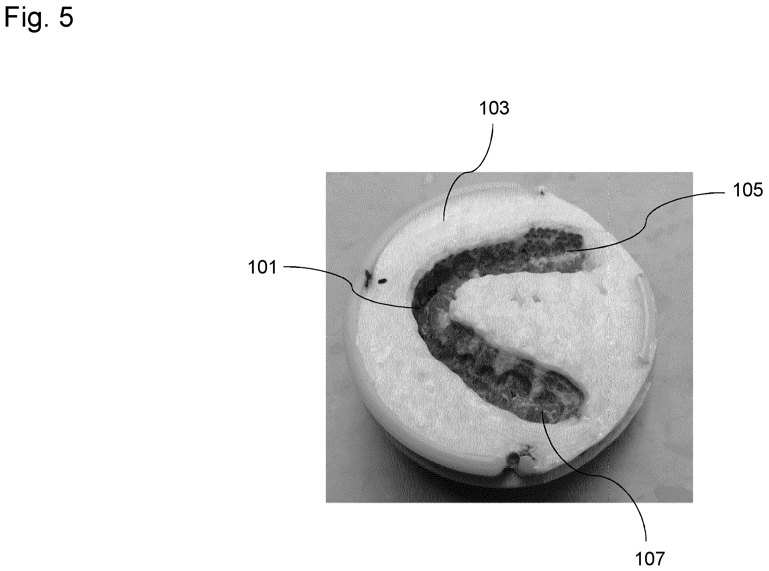

Fig. 4 und 5 zeigen eine Darstellung der Scheibe 103 mit herausgearbeiteter Zahnbogenform 101. Im nächsten Schritt werden die Spitzen der Borsten 105 von dem umliegenden Stützmaterial 107 freigelegt. Dies kann beispielsweise durch das vollständige oder teilweise Auflösen oder Schmelzen des Stützmaterials 107 erfolgen.

Das Entfernen des Stützmaterials 107 kann teilweise erfolgen, so dass das zurückbleibende Stützmaterial 107 als Träger für die Borsten 105 dient. Dadurch werden die Enden der Borsten 105 fixiert. Der Träger für die Borsten 105 kann aus dem verbliebenen Stützmaterial 107 erzeugt werden.

Falls bereits ein Trägermaterial 109 für die Borsten 105 in die Scheibe 103 eingearbeitet worden ist, kann das Stützmaterial 107 auch vollständig entfernt werden.

Als Stützmaterial 107 für die Borsten 105 kann Polyethylenglykol (PEG) verwendet werden. Auch Wachse eignen sich als gutes Stützmaterial 107, da sich diese nach dem Herausfräsen des Zahnbogens bei Temperaturen oberhalb des Schmelzpunktes verflüssigen lassen.

Eine weitere Möglichkeit besteht darin, zunächst das Stützmaterial 107 an den Enden der Bosten 105 teilweise zu entfernen, um an diesen Stellen ein geeignetes Trägermaterial 109 einzubringen, das die Borsten 105 fixiert. Das Stützmaterial 107 wird dadurch im Übergangsbereich zur Scheibe 103 durch ein geeignetes Trägermaterial 109 ersetzt.

Anschließend kann das restliche Stützmaterial 107 um die fixierten Borsten 105 herum entfernt werden. Die Spitzen oder Kanten der Borsten 105 können dann abgerundet werden. Dies kann thermisch durch Schmelzen oder chemisch durch einen Ätzprozess ausgeführt werden.

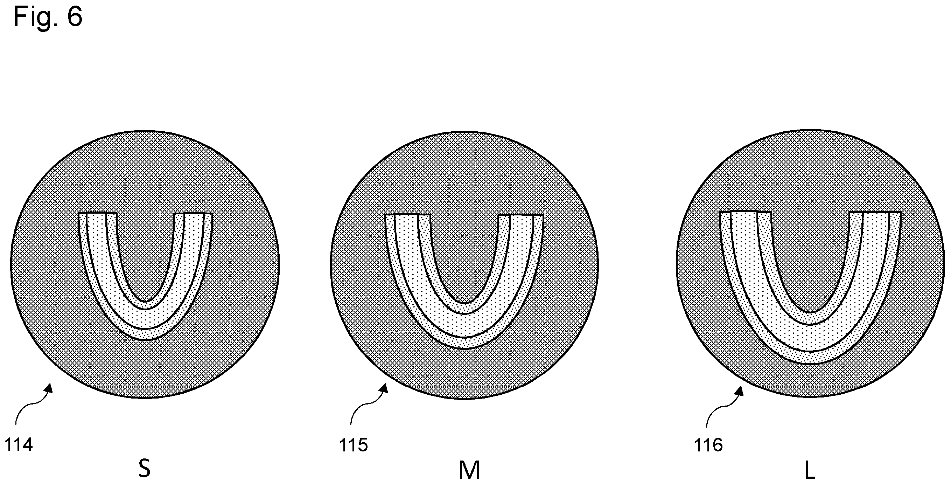

In Fig. 6 werden beispielhaft Scheiben mit verschiedenen vorgegebenen Größen der U-förmigen Borstenanordnung 114 bis 116 dargestellt, um mit wenigen Formen möglichst alle Zahngrößen und -formen abzudecken.

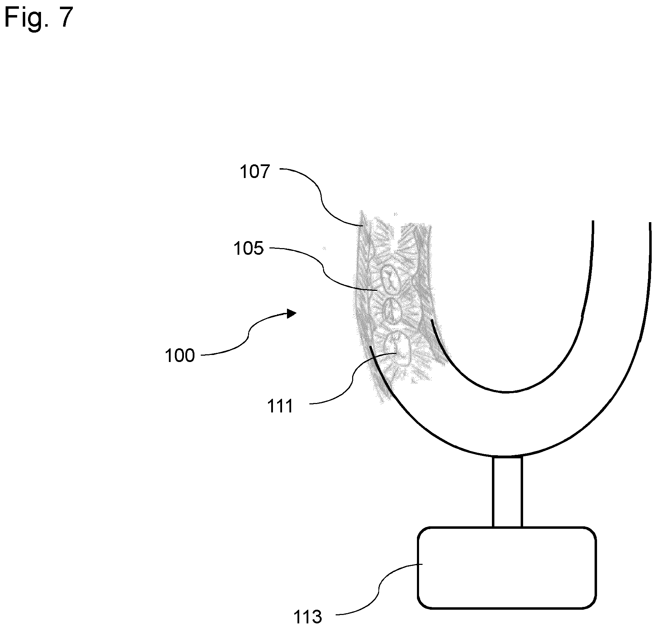

Fig. 7 zeigt eine schematische Darstellung einer Zahnbogenzahnbürste 100. Durch das Herstellungsverfahren weist die Zahnbogenzahnbürste 100 Borsten 105 auf, die die Zahnbogenform exakt abformen. Die Borsten 105 werden durch das Trägermaterial 109 gehalten.

Die Zahnbogenzahnbürste 100 kann auf den Zahnbogen eines Patienten gesetzt werden. Dort liegen durch die Formgebung die Spitzen der Borsten 105 unmittelbar an der Oberfläche des Zahnbogens und den Zähnen 111 an.

Die Zahnbogenzahnbürste 100 ist mit einem elektro-mechanischen Schwingungserzeuger 113 gekoppelt, der die Borsten 105 in translatorische oder rotatorische Schwingungen versetzt. Durch diese Schwingungen werden die Zähne 111 gereinigt. Hierzu kann ein Exzentermotor verwendet werden, der den Borstenträger in eine mechanische Bewegung versetzt.

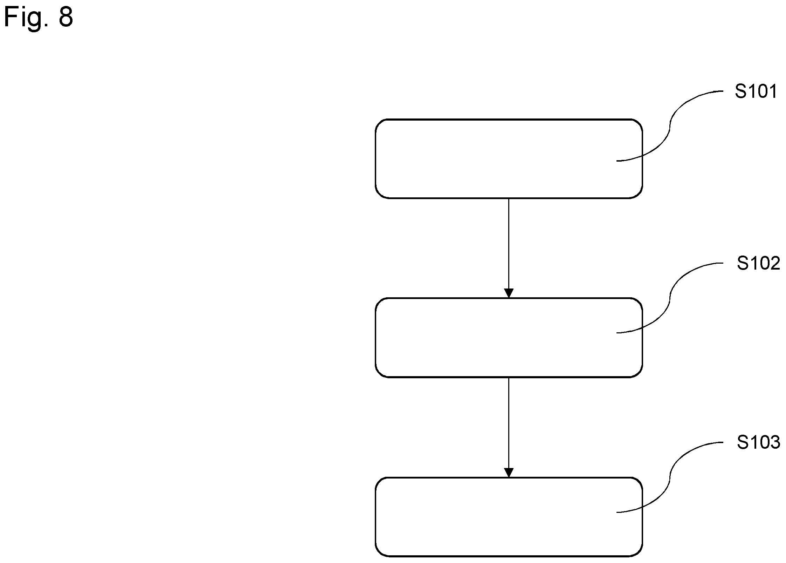

Fig. 8 zeigt ein Blockdiagramm zum Herstellen der Zahnbogenzahnbürste 100. In Schritt S101 wird eine Zahnbogenform 101 eines Patienten erfasst, wie beispielsweise digital mittels eines Intraoralscanners. In Schritt S102 wird die Zahnbogenform 101 aus der Scheibe 103 herausgearbeitet, in der die Borsten 105 der Zahnbogenzahnbürste 100 eingebettet sind. Anschließend werden in Schritt S103 die Spitzen der Borsten 105 aus dem umgebenden Stützmaterial 107 freigelegt. Danach wird die äußere Form der Zahnbogenzahnbürste 100 aus der Scheibe 103 herausgearbeitet. Auf diese Weise wird eine **u-**förmige Zahnbogenzahnbürste 100 erhalten, bei der die Borsten 105 an die individuelle Zahnbogenform 101 des Patienten angepasst sind.

Das Verfahren ermöglicht eine individuelle Anpassung der Borsten 105. Hierfür sind die Borsten 105, die aus verschiedenen Materialien bestehen können in das Stützmaterial 107 eingebettet, das anschließend vollständig oder partiell ausgelöst werden kann. Das Verfahren bietet dadurch die Möglichkeit der Herstellung einer individuell angepassten Zahnbogenzahnbürste 100 durch einen digitalen Workflow.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Zahnbogenzahnbürste
- 101: Zahnbogenform
- 103: Scheibe
- 105: Borsten
- 107: auflösbares Stützmaterial
- 109: Trägermaterial
- 111: Zahn
- 113: Schwingungserzeuger
- 114: Scheibe mit Zahnbogengröße in S
- 115: Scheibe mit Zahnbogengröße in M
- 116: Scheibe mit Zahnbogengröße in L

## Patentansprüche

1. Verfahren zum Herstellen einer Zahnbogenzahnbürste (100), mit den Schritten:
- Erfassen (S101) einer Zahnbogenform (101) eines Patienten; und
- Herausarbeiten (S102) der Zahnbogenform (101) aus einer Scheibe (103), in der die Borsten (105) der Zahnbogenzahnbürste (100) eingebettet sind, wobei die Spitzen der Borsten in der Scheibe (103) aus einem Stützmaterial (107) freigelegt werden oder die Enden der Borsten (105) aus einem Stützmaterial (107) freigelegt werden.

2. Verfahren nach Anspruch 1, wobei die Zahnbogenform (101) mittels eines Intraoralscanners erfasst wird.

3. Verfahren nach einem der vorangehenden Ansprüche, wobei die herausgearbeitete Zahnbogenform kleinere Abmessungen aufweist als die erfasste Zahnbogenform.

4. Verfahren nach Anspruch 1, wobei die Spitzen der Borsten (105) abgerundet werden.

5. Verfahren nach Anspruch 1, wobei die freigelegten Enden der Borsten (105) in ein Trägermaterial (109) eingebettet werden.

6. Verfahren nach einem der vorangehenden Ansprüche, wobei die äußere Form der Zahnbogenzahnbürste (100) aus der Scheibe (103) herausgearbeitet wird.

7. Verfahren nach einem der vorangehenden Ansprüche, wobei die Zahnbogenform (101) aus der Scheibe (103) und/oder die Form der Zahnbogenzahnbürste (100) aus der Scheibe (103) herausgefräst wird.

8. Scheibe (103) zum Herstellen einer Zahnbogenzahnbürste (100) aus einem Kunststoffmaterial, in dem die Borsten (105) der Zahnbogenzahnbürste (100) eingebettet sind und die Spitzen der Borsten (105) in einem auflösbaren Stützmaterial (107) angeordnet sind.

9. Scheibe (103) nach Anspruch 8, wobei das auflösbare Stützmaterial Polyethylenglykol, Polyvinylalkohol oder ein Wachs umfasst.

10. Scheibe (103) nach einem der Ansprüche 8 oder 9, wobei die Enden der Borsten (105) in einem Trägermaterial (109) angeordnet sind.

11. Scheibe (103) nach einem der Ansprüche 8 bis 10, wobei die Borsten (105) gerichtet, ungerichtet, gekreuzt oder senkrecht zur Zahnoberfläche in der Scheibe (103) angeordnet sind.

## Claims

1. A method of producing a dental arch toothbrush (100), comprising the steps of:
- detecting (S101) a dental arch shape (101) of a patient; and
- working out (S102) the dental arch shape (101) from a disk (103) in which the bristles (105) of the dental arch toothbrush (100) are embedded, wherein the tips of the bristles in the disc (103) are exposed from a support material (107) or the ends of the bristles (105) are exposed from a support material (107).

2. The method according to claim 1, wherein the dental arch shape (101) is detected by means of an intraoral scanner.

3. The method according to any one of the preceding claims, wherein the worked-out dental arch shape has smaller dimensions than the detected dental arch shape.

4. The method according to claim 1, wherein the tips of the bristles (105) are rounded.

5. The method according to claim 1, wherein the exposed ends of the bristles (105) are embedded in a carrier material (109).

6. The method according to any one of the preceding claims, wherein the outer shape of the dental arch toothbrush (100) is worked out of the disc (103).

7. The method according to any one of the preceding claims, wherein the dental arch shape (101) is milled out of the disk (103) and/or the shape of the dental arch toothbrush (100) is milled out of the disk (103).

8. A disc (103) for producing a dental arch toothbrush (100) from a plastic material in which the bristles (105) of the dental arch toothbrush (100) are embedded and the tips of the bristles (105) are arranged in a dissolvable support material (107).

9. The disc (103) according to claim 8, wherein the dissolvable support material comprises polyethylene glycol, polyvinyl alcohol, or a wax.

10. The disc (103) according to any one of claims 8 or 9, wherein the ends of the bristles (105) are arranged in a carrier material (109).

11. The disc (103) according to any one of claims 8 to 10, wherein the bristles (105) are arranged directionally, non-directionally, crossed or perpendicular to the tooth surface in the disc (103).

## Revendications

1. Procédé de fabrication d'une brosse à dents à arcade dentaire (100), comprenant les étapes consistant à :
- acquérir (S101) une forme d'arcade dentaire (101) d'un patient ; et
- façonner (S102) la forme d'arcade dentaire (101) dans un disque (103) dans lequel les poils (105) de la brosse à dents à arcade dentaire (100) sont incorporés, les pointes des poils dans le disque (103) étant dégagées d'un matériau de support (107) ou les extrémités des poils (105) étant dégagées d'un matériau de support (107).

2. Procédé selon la revendication 1, dans lequel la forme d'arcade dentaire (101) est acquise au moyen d'un scanner intra-oral.

3. Procédé selon l'une quelconque des revendications précédentes, dans lequel la forme d'arcade dentaire façonnée présente des dimensions plus petites que la forme d'arcade dentaire acquise.

4. Procédé selon la revendication 1, dans lequel les pointes des poils (105) sont arrondies.

5. Procédé selon la revendication 1, dans lequel les extrémités dégagées des poils (105) sont incorporées dans un matériau porteur (109).

6. Procédé selon l'une quelconque des revendications précédentes, dans lequel la forme extérieure de la brosse à dents à arcade dentaire (100) est façonnée à partir du disque (103).

7. Procédé selon l'une quelconque des revendications précédentes, dans lequel la forme d'arcade dentaire (101) est fraisée dans le disque (103) et/ou la forme de la brosse à dents à arcade dentaire (100) est fraisée à partir du disque (103).

8. Disque (103) pour la fabrication d'une brosse à dents à arcade dentaire (100), en un matériau plastique, dans lequel les poils (105) de la brosse à dents à arcade dentaire (100) sont incorporés et les pointes des poils (105) sont disposées dans un matériau de support soluble (107).

9. Disque (103) selon la revendication 8, dans lequel le matériau de support soluble comprend du polyéthylène glycol, de l'alcool polyvinylique ou une cire.

10. Disque (103) selon l'une des revendications 8 ou 9, dans lequel les extrémités des poils (105) sont disposées dans un matériau porteur (109).

11. Disque (103) selon l'une quelconque des revendications 8 à 10, dans lequel les poils (105) sont disposés dans le disque (103) de manière orientée, non orientée, croisée ou perpendiculairement à la surface des dents.
